(19) Europäisches Patentamt
European Patent Office
Office européen des brevets

(11) Veröffentlichungsnummer: **0 125 466**
**B1**

(12) # EUROPÄISCHE PATENTSCHRIFT

(45) Veröffentlichungstag der Patentschrift: **24.06.87**

(51) Int. Cl.⁴: **D 06 N 3/14**, C 08 G 18/65, C 08 G 18/32, C 08 G 18/38

(21) Anmeldenummer: **84103783.1**

(22) Anmeldetag: **05.04.84**

(54) **Verfahren zur mehrstrichigen Umkehrbeschichtung mit Polyurethanlösungen.**

(30) Priorität: **13.04.83 DE 3313239**

(43) Veröffentlichungstag der Anmeldung: **21.11.84 Patentblatt 84/47**

(45) Bekanntmachung des Hinweises auf die Patenterteilung: **24.06.87 Patentblatt 87/26**

(84) Benannte Vertragsstaaten: **BE DE FR GB IT NL**

(56) Entgegenhaltungen:
**DE - A - 2 431 846**
**DE - A - 2 455 318**
**FR - A - 2 258 480**

(73) Patentinhaber: **BAYER AG, Konzernverwaltung RP Patentabteilung, D-5090 Leverkusen 1 Bayerwerk (DE)**

(72) Erfinder: **Thoma, Wilhelm, Dr., Birkenweg 25, D-5090 Leverkusen 31 (DE)**
Erfinder: **Pedain, Josef, Dr., Haferkamp 6, D-5000 Köln 80 (DE)**
Erfinder: **Schröer, Walter, Dr., Nicolai-Hartmannstrasse 29, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Gegenstand der Erfindung ist ein Verfahren zur mehrstrichigen Umkehrbeschichtung unter Verwendung mindestens zweier, verschiedener Polyurethanbeschichtungslösungen, wobei jedoch alle Beschichtungslösungen ein und dasselbe polare Lösungsmittel, vorzugsweise im wesentlichen wasserfreies Dimethylformamid, enthalten und wo durch die Auswahl von

A) Deckstrich-Polyurethanlösungen speziellen Aufbaus unter Verwendung hochschmelzender Diol-Kettenverlängerungsmittel und

B) die Verwendung von hochkonzentrierten Haftstrich-Polyurethanlösungen mit mindestens 40 Gew.-% Polyurethan

beim Aufbringen des Haftstrichs auf die Deckschicht A) im Umkehrverfahren der sogenannte «Eisblumen-Effekt» und das störende «Durchkaschieren» der Textilbahn beim Zukaschieren zu den im Umkehrverfahren gebildeten PU-Schichten wirkungsvoll verhindert wird. Ausserdem wird die Wiedergewinnung des Lösungsmittels der Beschichtungslösungen vereinfacht.

Es gehört seit längerem zum Stande der Technik, Textilien (z.B. Gewebe, Gewirke oder Vliese) mit Lösungen von Polyester- und/oder Polyetherurethanen nach dem Umkehrverfahren zu beschichten. Die erhaltenen Artikel werden zur Fabrikation von Oberbekleidung, Polsterwaren, Täschnerwaren, Schuhobermaterialien und anderen verwendet. Eine besonders bedeutende Rolle im Markt spielt die Herstellung von Schuhobermaterialien.

Eine typische Umkehrbeschichtung wird beispielsweise wie folgt vorgenommen:

Auf einer Beschichtungsmaschine wird z.B. mittels Walzenrakel auf ein Trennpapier die Deckstrichlösung A) aufgerakelt; die Auftragsmenge beträgt beispielsweise 120 g/m$^2$ Lösung. Nach der Passage durch den Trockenkanal, der am Eingang eine Lufttemperatur von 80 bis 100 °C und am Ausgang von 120 bis 140 °C aufweist, wird in einer zweiten Streichanlage die Haftstrichlösung B), z.B. in einer Menge von 120 g/m$^2$, in analoger Weise aufgerakelt und auf den noch lösungsmittelnassen Haftstrich die Textilbahn, z.B. eine gerauhte Baumwoll-Duvetine-Ware von 240 g/m$^2$ Gewicht, zukaschiert und im Trockenkanal das Lösemittelgemisch des Haftstrichs verdunstet. Beim Verlassen des Trockenkanals wird das Trennpapier und die beschichtete Gewebebahn (Kunstleder) unabhängig aufgewickelt.

In diesem allgemeinen Ablauf einer Umkehrbeschichtung auf Trennpapier können erhebliche Schwierigkeiten auftreten, welche die Fabrikation einer technisch einwandfrei beschichteten Textilbahn unmöglich machen.

Beim Auftragen der Haftstrichlösung B), die sowohl ein Einkomponenten-, ein Zweikomponenten-Polyurethan und/oder eine High-Solid-Polyurethan-Reaktivmischung sein kann, auf die trockene, etwa 0,03 bis 0,05 mm dicke Deckstrichfolie, kann der sogenannte «Eisblumen-Effekt» auftreten.

Mit diesem bildhaften Begriff wird folgende Erscheinung bezeichnet: Ist das Lösemittelgemisch des Haftstriches B) ein schlechtes Lösungsmittel für das Polyurethan des Deckstriches A) wird dieser nicht angelöst sondern angequollen. Die Quellung hat aber zur Folge, dass sich der Deckstrichfilm an zahlreichen, flächigen Stellen der Bahn vom Trennpapier abhebt, an anderen Stellen aber noch haftet. Diese Quellerscheinung, an mehreren Stellen beginnend, läuft wie gefrierende Eisblumen an einem kalten Fenster in Sekundenschnelle über die gesamte Fläche hinweg und macht die Beschichtung für die Weiterverarbeitung unbrauchbar.

Zur Vermeidung dieses Effektes wurden bisher solche Lösungsmittel im Haftstrich verwendet, welche den Deckstrich nicht nur anquellen sondern anlösen.

Ist das Lösevermögen der Haftstrichlösung für den Deckstrich jedoch zu gross, dann beobachtet man den Effekt des sogenannten «Durchkaschierens». Der bereits trockene Deckstrich wird durch das Lösemittel (gemisch) des Haftstriches so stark angelöst, dass die zukaschierte Textilbahn durch beide Polyurethanschichten hindurchgedrückt wird und somit die textile Struktur, wie z.B. der Flor, auf der Oberseite der Beschichtung sichtbar wird. Damit ist zwangsläufig ein deutlicher Abfall der physikalischen Echtheiten der Beschichtungen, z.B. der Knickechtheit und der Abriebechtheit, verbunden.

Nach bisherigen Erkenntnissen hat eine Haftstrichlösung immer dann ein zu hohes Lösevermögen für den Deckstrich, wenn sie im Lösemittelgemisch viel oder gar ausschliesslich hochpolare Lösungsmittel wie Dimethylformamid oder Dimethylacetamid enthält.

Aus Gründen des Umweltschutzes wird zur Verminderung der Luftverschmutzung die Verbrennung oder Rückgewinnung von organischen Lösungsmitteln aus technischen Prozessen, wie z.B. demjenigen der Beschichtung von Textilien mit Polyurethanlösungen, ein akutes technisches Problem. Die aus ökologischen Erfordernissen notwendige Rückgewinnung von Lösungsmitteln aus dem Prozess der Textilbeschichtung ist nur dann rationell und wirtschaftlich durchzuführen, wenn die Polyurethanlösungen entgegen dem bisherigen Stand der Technik nicht Lösemittelgemische, wie Dimethylformamid/Methylethylketon, Dimethylformamid/Methylethylketon/Toluol, Toluol/Isopropanol und andere Gemische enthalten, sondern mit einem einheitlichen Lösemittel aufgebaut sind. Aus Gründen der Löslichkeit von Polyurethanen eignen sich hierfür nur hochpolare Lösungsmittel wie Dimethylformamid, Dimethylacetamid, Monomethylformamid, Monomethylacetamid, N-Methyl-pyrrolidon und in Ausnahmefällen auch weniger polare Lösungsmittel wie Tetrahydrofuran oder Methylethylketon. Dabei kommt dem Dimethylformamid wegen seines Lösevermögens und seiner technischen Verfügbarkeit eine besondere Rolle zu.

Es ist somit nach einem Verfahren zu suchen, wo man nur ein Lösungsmittel, vorzugsweise Dimethylformamid, für das Beschichtungsverfahren einsetzt, ohne dass die negativen Erscheinungen wie der Eisblumen-Effekt und das Durchkaschieren beim Beschichtungsvorgang eintreten.

Es ist zwar bekannt, zur Verminderung der Einwirkung von Dimethylformamid-Haftstrichlösungen auf bereits auf Trennpapier applizierte (aufgetrocknete) Deckstriche, der Haftstrichlösung dosierte Mengen an Wasser zuzusetzen (DE-A-2 431 846), doch vermindert sich dadurch die Löslichkeit der Haftstrichpolyurethane derart, dass damit die Feststoffkonzentration des Haftstrichs nur relativ niedrig angesetzt werden kann. In der genannten Offenlegungsschrift sind für Deck- und Haftstriche Ein- oder Zweikomponenten-Polyurethane genannt, wobei die Polyurethane als Kettenverlängerungsmittel auch Etherdiole, Esterdiole, Amiddiole oder Harnstoffdiole enthalten können. Es ist jedoch die spezifische Auswahl für die Polyurethane A) und B) nicht gemacht. In der DE-A-2 455 318 werden Polyurethanlösungen auf Basis von Lösungsmittelgemischen wie Dimethylformamid/Methylethylketon als Deck- und Haftschichten, jedoch nass in nass aufgetragen und erst gemeinsam getrocknet. Auch hier lässt sich der «Eisblumeneffekt» vermeiden, doch ist die Aufarbeitung der Lösungsmittelgemische dadurch zu aufwendig.

Gegenstand der Erfindung ist daher ein Verfahren zur mehrstrichigen Umkehrbeschichtung von textilen, vorzugsweise bahnförmigen, Unterlagen zur Herstellung von Kunstleder aus zumindest einer Deckstrich- und mindestens einer Haftstrichlösung auf der Basis von Einkomponenten- oder Zweikomponentenpolyurethanen, wobei die Polyurethane auch Etherdiole, Esterdiole, Amiddiole oder Harnstoffdiole als Kettenverlängerungsmittel enthalten können, dadurch gekennzeichnet, dass man

A) als Deckstriche aromatische oder aliphatische Ein- oder Zweikomponenten-Polyurethane verwendet, welche unter Verwendung von Kettenverlängerungsmitteln auf der Basis von niedermolekularen Diolen mit Schmelzpunkten über 100 °C der Formeln (I) bis (VI)

$$HO-\underset{R'}{C}H-CH_2-O-R-O-CH-\underset{R'}{C}H-OH \qquad (I)$$

$$HO-\underset{R'}{C}H-CH_2-O-CO-R-CO-O-CH_2-\underset{R'}{C}H-OH \qquad (II)$$

$$HO-\underset{R'}{C}H-CH_2-O-CO-NH-R-NH-CO-O-CH_2-\underset{R'}{C}H-OH \qquad (III)$$

$$HO-\underset{R'}{C}H-CH_2-\underset{R'}{N}-CO-NH-R-NH-CO-\underset{R'}{N}-CH_2-\underset{R'}{C}H-OH \qquad (IV)$$

$$HO-\underset{R'}{C}H-CH_2-\underset{R'}{N}-CO-R-CO-\underset{R'}{N}-CH_2-\underset{R'}{C}H-OH \qquad (V)$$

$$HO-(CH_2)_x-\underset{R'}{C}H-CO-NH-R-NH-CO-\underset{R'}{C}H-(CH_2)_x-OH \qquad (VI)$$

wobei

R Alkylen-, Cycloalkylen- oder Arylenreste mit 2 bis 20, vorzugsweise 2 bis 15 C-Atomen,

R' H, $CH_3$ und

x ganze Zahlen von 0 bis 5 bedeuten, aufgebaut werden,

B) als Haftstriche von A) verschiedene aromatische oder aliphatische Ein- oder Zweikomponenten-Polyurethane (PU) und/oder High-Solid-PU-Reaktivmischungen verwendet, welche eine Feststoffkonzentration von mehr als 40 Gew.-% aufweisen und

C) als Lösungsmittel für A) und B) ein einziges polares Lösungsmittel aus der Reihe Dimethylformamid, Dimethylacetamid, Methylpyrrolidon oder Tetrahydrofuran ohne Wasserzusatz einsetzt.

Die zur Beschichtung verwendeten Polyurethane sind zwar nicht grundsätzlich neu, doch ergibt sich der erfinderische Tatbestand und der technische Fortschritt aus der bestimmten Auswahl von Polyurethanen für den Deckstrich und die Kombination mit den hochkonzentrierten Polyurethanen für den Haftstrich, was insgesamt die Verwendung von Dimethylformamid oder ähnlichen polaren Lösungsmitteln als alleinige Lösungsmittel ermöglicht.

Als Deckstriche A) werden aromatische oder aliphatische Einkomponentenpolyurethane verwendet, welche unter Einsatz von Kettenverlängerungsmitteln auf der Basis von niedermolekularen Diolen mit Schmelzpunkten über 100 °C (entsprechend den Formeln (I) bis (VI) ) aufgebaut wurden. Hierzu werden im allgemeinen höhermolekulare zwei- oder mehrfunktionelle Polyhydroxylverbindungen (vorzugsweise mit Molekulargewichten von etwa 500 bis 6000), gegebenenfalls unter Zusatz von niedermolekularen Polyolen wie Butandiol oder Trimethylolpropan, mit überschüssigen Mengen an Diisocyanaten in NCO-Prepolymere überführt und diese mit den hochschmelzenden Kettenverlängerungsmitteln (I) bis (VI) in etwa äquivalenten Mengen umgesetzt (Zweistufenverfahren) oder die höhermolekularen Polyhydroxylverbindungen werden in einer Stufe mit den niedermolekularen Polyolen, welche zu überwiegenden Anteilen aus den höherschmelzenden Polyolen der Formeln (I) bis (VI) bestehen und etwa äquivalenten Mengen an Diisocyanaten direkt ins hochmolekulare Polyurethan überführt (Einstufenverfahren). Bei Verwendung von aromatischen Diisocyanaten spricht man hierbei von aromatischen Polyurethanen, entsprechend bei aliphatischen Diisocyanaten von aliphatischen Polyurethanen. Die Polyurethane sind als solche hochmolekular und bei Verwendung von praktisch difunktionellen Reaktionskomponenten in Lösungsmitteln löslich. Sie können in der Schmelze, in Reaktionsschnecken oder auch direkt in Lösung hergestellt werden.

Verwendet man bei der Polyurethansynthese einen Unterschuss an NCO-Äquivalenten oder Kettenabbrecher, so entstehen OH-Endgruppen aufweisende, nicht so hochmolekulare Polyurethane, die anschliessend durch Zugabe von Polyisocyanaten oder auch anderen Vernetzern, z.B. Formaldehydharzen, gegebenenfalls unter Zusatz von Katalysatoren, vernetzt werden (sog. Zweikomponenten-Polyurethane).

Die Haftstriche B) können aus Ein- bzw. Zweikomponenten-Polyurethanen bestehen, die mit Formaldehydharzen, vorzugsweise mit Formaldehyd-Harnstoff- und/oder Melaminharzen und/oder Polyisocyanaten, gegebenenfalls in blockierter Form (Abspalter), vernetzt werden. Die Polyurethane werden vorzugsweise aus höhermolekularen Polyhydroxylverbindungen, gegebenenfalls niedermolekularen Polyolen, aliphatischen oder aromatischen Polyisocyanaten und Diolen oder Diaminen, z.B. Isophorondiamin, als Kettenverlängerungsmittel aufgebaut. Bevorzugt sind Polyurethane für B) aus höhermolekularen Polyhydroxylverbindungen, 0 bis 3,0 Mol an Diol-Kettenverlängerungsmitteln, vorzugsweise Alkylendiolen, die auch kleinere Anteile an Triolen enthalten können, und etwa äquivalenten Mengen an Diisocyanaten aufgebaut. Als erfindungsgemässe Haftstrichlösungen können jedoch auch sogenannte High-Solid-Polyurethane, wie sie in der DE-A-2 902 090 beschrieben werden, verwendet werden. Es handelt sich dabei um vorzugsweise mit Ketoximen blockierte NCO-Prepolymere mit NCO-Gehalten von 0,5 bis 3,0% NCO, vorzugsweise 0,5 bis 2% NCO, auf Basis höhermolekularer Polyhydroxylverbindungen, gegebenenfalls 0 bis 1 Mol niedermolekularen Polyolen und überschüssigen Mengen an aromatischen Diisocyanaten, welche in hochprozentiger Lösung in dem entsprechenden Lösemittel, vorzugsweise Dimethylformamid, mit aromatischen oder vorzugsweise aliphatischen Polyaminen vernetzt werden. Bevorzugt werden dabei wenig flüchtige aliphatische und besonders cycloaliphatische Diamine, z.B. 3,3'-Dimethyl-4,4'-diaminodicyclohexylmethan.

Die Polyurethane A) und B) werden nach an sich bekannten Verfahren, z.B. in der Schmelze oder in Lösung, hergestellt und zwar sowohl nach dem one-shot- als auch nach dem Prepolymer-Verfahren.

Als höhermolekulare Polyhydroxylverbindungen eignen sich insbesondere Dihydroxypolyester und/oder Dihydroxypolyether mit Molekulargewichten zwischen 600 und 4000. Als Diisocyanate werden vorzugsweise die Toluylendiisocyanate, Diphenylmethandiisocyanate sowie das Isophorondiisocyanat oder Dicyclohexylmethan-4,4'-diisocyanat eingesetzt. Geeignete höhermolekulare Polyhydroxylverbindungen und Diisocyanate sind in der DE-A-2 431 846 auf den Seiten 8 bis 10 beispielhaft aufgezählt.

Als oberhalb 100 °C schmelzende Diole der Formeln (I) bis (VI) können verwendet werden:

1,4-Phenylen-bis-(β-hydroxyethyl-ether), 4,4'-Biphenylen-bis-(β-hydroxyethyl-ether), 4,4'-Diphenyl-methan-bis-(β-hydroxy-ethyl-ether), 4,4'-Benzophenon-bis-(β-hydroxypropyl-ether);

Terephthalsäure-bis-(β-hydroxyethylester), Tetrachlorterephthalsäure-bis-(β-hydroxy-propylester), Diphenylether-4,4'-dicarbonsäure-bis-(β-hydroxyethylester), 1,5-Naphthalin-dicarbonsäure-bis-(2-hydroxypropylester); 1,2-Ethylen-bis-(β-hydroxyethylurethan), 4,4'-Diphenylmethan-bis-(β-hydroxy-ethylurethan), 1,4-Cyclohexan-bis-(β-hydroxyethylurethan), 4,4'-Dicyclohexyl-methan-bis-(β-hydroxypropyl-urethan); 2,6-Toluylen-bis-(β-hydroxyethylurethan), 1,5-Naphthalin-bis-(β-hydroxy-ethylurethan).

1,6-Hexamethylen-bis-(β-hydroxyethylharnstoff), 4,4'-Diphenylmethan-bis-(β-hydroxy-propylharnstoff), 2,4- und 2,6-Toluylen-bis-(β-hydroxyethylharnstoff), Isophoron-bis-(β-hydroxyethylharnstoff), 4,4'-Dicyclohexylmethan-bis-(γ-propalharnstoff);

Terephthalsäure -bis-(β-hydroxyethyl-N-methylamid), 1,4-Cyclohexandicarbonsäure-bis-(β-hydroxyethylamid), Isophthalsäure-bis-(γ-hydroxypropylamid), 1,4-Phenylen-bis-propionsäure-bis-(β-hydroxy-N-ethylamid), Hydrazodicarbonsäure-bis-(β-hydroxy-propylamid); 1,6-Hexamethylen-bis-(α-hydroxy-propionsäureamid), 1,4-Cyclohexan-bis-(δ-hydroxybuttersäureamid), 3,3'-Dimethyldicyclohexyl-methan-4,4'-bis-(ε-hydroxycapronsäureamid), 1,3-Phenylen-bis-(α-hydroxy-propionsäureamid.

Die Diole (I) bis (VI) sind zum Teil in den deutschen Offenlegungsschriften DE-A-2 431 846 und DE-A-1 544 864 beschrieben.

Neben den über 100 °C schmelzenden Diolen der Formeln (I) bis (VI) können in untergeordnetem Masse Diole wie Ethylenglykol, Propandiol-1,3 und Propandiol-1,2, Butandiol-1,4 und -2,3, Pentandiol-1,5, 2,2-Dimethylpropandiol-1,3, Hexandiol-1,6, Etherdiole wie Diethylenglykol, Triethylenglykol oder Amindiole wie N-Methyl-diethanolamin, N-Methyldipropanolamin oder andere, als Kettenverlängerer verwendet oder mitverwendet werden.

Zur Vernetzung der Haftstrichpolyurethane oder gegebenenfalls Deckstrichpolyurethane können Formaldehydharze wie Formaldehyd-Harnstoff- oder Formaldehyd-Melaminharze, Methylol-haltige Monomere wie Melaminhexamethylolether oder Copolymerisate, welche beispielsweise N-Methylolacrylamid als Comonomer enthalten, verwendet werden, die unter der katalytischen Wirkung sauer reagierender Substanzen, z.B. Maleinsäure, Phosphorsäure, 4-Toluolsulfonsäure, gegebenenfalls unter Pufferung mit Basen wie Ammoniak, N-Methylmorpholin, Triethanolamin, eingesetzt werden. Weitere Beispiele sind Polyepoxide, Polyaziridine oder Polyisocyanate, d.h. di-, tri- und mehrfunktionelle Polyisocyanate, gegebenenfalls in blockierter Form mit z.B. Phenol, Caprolactam oder Ketoximen als Abspaltergruppe.

Als Lösungsmittel für Deck- und Haftstrich kommen polare Lösungsmittel wie Dimethylformamid, Dimethylacetamid, Monomethylformamid, Monomethylacetamid, N-Methylpyrrolidon, aber auch Tetrahydrofuran und Methylethylketon in Frage. Dimethylformamid ist besonders bevorzugt.

Den Deckstrich- und Haftstrichlösungen können in der üblichen Weise und in üblichen Mengen weiterhin Pigmente, Füllstoffe und andere Hilfsmittel wie Hydrolysestabilisatoren, Farbstoffe, UV-Stabilisatoren, Antioxidantien, Griffmittel, Polysiloxane und andere übliche Zusatzstoffe beigefügt werden.

In den Beispielen wird die problemlose Kaschierbarkeit (ohne Eisblumen-Effekt und ohne Durchkaschierung) der die Kettenverlängerer der Formeln (I) bis (VI) enthaltenden Polyurethan-Deckstriche A) mit den hochkonzentrierten, nur ein Lösungsmittel und zwar das gleiche Lösungsmittel enthaltenden Haftstrichlösungen B) demonstriert.

Beispiele

Allgemeine Arbeitsweise bei der Beschichtung

Auf einer Beschichtungsmaschine wird mittels Walzenrakel auf ein Trennpapier die Deckstrichlösung A) aufgerakelt; die Auftragsmenge beträgt 100 bis 150 g/m$^2$ Lösung. Nach der Passage durch den Trockenkanal, der am Eingang eine Lufttemperatur von 100 °C und am Ausgang von 140 °C aufweist, wird in der zweiten Streichanlage die Haftstrichlösung B), 50 bis 150 g/m$^2$, in analoger Weise aufgerakelt, die Textilbahn, z.B. eine gerauhte Baumwoll-Duvetine-Ware von 240 g Quadratmeter-Gewicht, zukaschiert und im Trokkenkanal das Lösemittel des Haftstriches verdunstet und gegebenenfalls die Vernetzung bei erhöhter Temperatur herbeigeführt (z.B. 150 bis 160 °C). Beim Verlassen des Trockenkanals wird das Trennpapier und die beschichtete Gewebebahn unabhängig voneinander aufgewickelt.

Beispiel 1

Die Deckstrichlösung A) 1 ist eine 25%ige Lösung eines Polyesterpolyurethans in Dimethylformamid (DMF) mit einer Viskosität von 8000 mPa.s/25 °C.

Das PU wird durch Schmelzkondensation von 1000 g (0,45 Mol) Butandiol-1,4-adipinsäurepolyester, 150 g (0,76 Mol) 1,4-Phenylenbisoxethylether (Fp. 105 °C) und 305 g (1,22 Mol) 4,4'-Diphenylmethan-diisocyanat hergestellt.

Die Deckstrichlösung A/V-1 (Vergleich) ist eine 25%ige Lösung eines Polyesterpolyurethans in DMF mit einer Viskosität von 9000 mPa.s/25 °C. Das Polyurethan wird durch Schmelzkondensation von 1000 g (0,45 Mol) Butandiol-1,4-adipinsäurepolyester, 69 g (0,76 Mol) Butandiol-1,4 und 305 g (1,22 Mol) 4,4'-Diphenylmethandiisocyanat hergestellt.

Die Deckstrich-Lösung A/V-2 (Vergleich) ist eine 25%ige Lösung eines Polyesterpolyurethansin DMF mit einer Viskosität von 8700 mPa.s/25 °C. Das Polyurethan wird durch Schmelzkondensation von 1000 g (0,45 Mol) Butandiol-1,4-adipinsäurepolyester, 181 g Butandiol-1,4 (2,02 Mol) und 620 g (2,46 Mol) 4,4'-Diphenylmethandiisocyanat hergestellt.

Die Haftstrichlösung B) 1 ist eine 50%ige Lösung eines Polyesterpolyurethans in DMF mit einer Viskosität von 45 000 mPa.s/25 °C. Das Polyurethan wird ebenfalls durch Schmelzkondensation hergestellt:

1000 g (0,45 Mol) Butandiol-1,4-adipinsäurepolyester, 89 g (0,99 Mol) Butandiol-1,4 und 360 g (1,44 Mol) 4,4'-Diphenylmethandiisocyanat werden in einer Reaktionsschnecke umgesetzt und anschliessend granuliert.

Die Haftstrichlösung B/V-1 (Vergleich) ist eine nur 30%ige Lösung eines Polyesterpolyurethans in DMF mit einer Viskosität von 20 000 mPa.s/25 °C. Die Herstellung erfolgt durch Schmelzkondensation der Komponenten analog zur Haftstrichlösung B)1.

Die nach der allgemeinen Arbeitsweise im Transferverfahren hergestellten Beschichtungen sind wie folgt in ihrem Kaschierzustand zu vergleichen:

| Transferbeschichtungen | Zustand der Beschichtung |
|---|---|
| A)1/B)1 (erfindungsgemäss) | nicht durchkaschiert |
| A/V-1/B)1 (Vergleich) | stark durchkaschiert |
| A/V-2/B)1 (Vergleich) | durchkaschiert |
| A)1/B/V-1 (Vergleich) | stark durchkaschiert |

Beispiel 2

Die Deckstrichlösung A)2 ist eine 30%ige Lösung eines Polyesterpolyurethans in DMF mit einer Viskosität von 18 000 mPa.s bei 25 °C. Das Polyurethan wird durch Lösungspolyaddition von 1000 g (0,50 Mol) eines Mischpolyesters aus Hexandiol-1,6, Neopentylglykol und Adipinsäure (Verhältnis der Glykole 65:35) mit 279 g (1,10 Mol) Terephthalsäure-bis-(β-oxethylester) (Fp.:

109 °C) und 400 g (1,60 Mol) 4,4'-Diphenylmethandiisocyanat bei 70 bis 80 °C hergestellt.

Die Haftstrichlösung B)2 ist eine 52%ige Lösung in DMF mit ca. 25 000 mPa.s bei 25 °C. Sie besteht aus 1000 g einer 50%igen PU-Lösung in DMF, 40,0 g eines handelsüblichen Formaldehyd-Melaminharzes (Melaminhexamethylether) und 10,0 g einer DMF-Lösung von 2,0 g Toluolsulfonsäure und 1,6 g Triethanolamin (Vernetzungskatalysator).

Die 50%ige PU-Lösung selbst wird durch Polyaddition in DMF hergestellt: 1000 g Diethylenglykol-adipinsäurepolyester (0,50 Mol), 80,0 g (0,75 Mol) Diethylenglykol und 218,0 g (1,25 Mol) Toluylen-diisocyanat-2,4/2,6 (Isomerengemisch 80/20) werden bei 70 bis 80 °C miteinander umgesetzt.

Die Beschichtung aus A)2/B)2, ein Schuhobermaterial, zeigt einwandfreie dichte Oberfläche, es tritt kein Durchkaschieren auf. Der Deckstrich A)2 ist gegen die Einwirkung des DMF aus dem Haftstrich B)2 unter den Bedingungen des Beschichtungsablaufs beständig und zeigt keinen Eisblumen-Effekt bei der Kombination Deckstrich mit Haftstrichlösung auf.

Beispiel 3

Die Deckstrichlösung A)3 ist eine 35%ige Lösung eines Polyetherpolyurethans in DMF, Viskosität 27 000 mPa.s/25 °C. Das Polyurethan wird durch Polyaddition in Lösung hergestellt:

1000 g (0,5 Mol) eines Dihydroxy-oxytetramethylen-polyethers, 467 g (1,25 Mol) 4,4'-Diphenylmethan-bis-(β-hydroxyethyl-urethan) (Fp.: 140 °C) und 438 g (1,75 Mol) 4,4'-Diphenylmethandiisocyanat werden in Lösung bei 60 bis 70 °C polyaddiert.

Die Haftstrichlösung B)3 ist eine 72%ige Lösung eines Zweikomponenten-PU in DMF, Viskosität 38 000 mPa.s/25 °C. Die Lösung besteht aus 1000 g einer 70%igen PU-Lösung in DMF und 70 g eines Polyisocyanats aus Tripropylenglykol (1,0 Mol) und 4,4'-Diphenylmethandiisocyanat (5,0 Mol) mit einem NCO-Gehalt von ca. 20% als Vernetzer.

Die 70%ige PU-Lösung selbst wird durch Polyaddition in DMF hergestellt:

1000 g (0,5 Mol) Dihydroxy-oxypropylen-polyether, 54,0 g (0,60 Mol) Butandiol-1,4 und 191 g (1,1 Mol) Toluylendiisocyanat-2,4/2,6 (Isomerengemisch 80/20) werden bei 80 bis 90 °C umgesetzt.

Das aus A)3 und B)3 im Transferverfahren hergestellte Schuhobermaterial ist störungsfrei kaschiert. Durchkaschieren tritt nicht auf.

Beispiel 4

Die Deckstrichlösung A)4 ist eine 30%ige Lösung eines Polyesterpolyurethans in DMF, Viskosität 18 500 mPa.s/25 °C. Das Polyurethan wird durch Polyaddition in Lösung hergestellt:

1000 g (0,50 Mol) Diethylenglykoladipinsäurepolyester, 450 g (1,20 Mol) 4,4'-Diphenylmethan-bis-(β-hydroxyethylurethan) (Fp.: 140 °C) und 425 g (1,70 Mol) 4,4'-Diphenylmethandiisocyanat werden in Lösung polyaddiert.

Aus A)4 und B)1 wird im Transferverfahren Schuhobermaterial hergestellt. Die Beschichtung zeigt keinerlei Durchkaschieren. Der Deckstrich A)4 ist im Beschichtungsablauf gegen die DMF-Konzentration des Haftstriches B)1 beständig.

Beispiel 5

Die Deckstrichlösung A)5 ist eine 30%ige Lösung eines Polyesterpolyurethans in DMF, Viskosität bei 25 °C 20 000 mPa.s/25 °C. Das Polyurethan wird durch Polyaddition in Lösung hergestellt:

1000 g eines Polycaprolactondiols (0,5 Mol), 160 g (0,40 Mol) 4,4'-Diphenylmethan-bis-(γ-hydroxypropyl)-harnstoff (Fp.: 230 °C), 225 g (0,90 Mol) 4,4'-Diphenylmethandiisocyanat werden in Lösung bei 70 bis 80 °C polyaddiert.

Die Haftstrichlösung B)5 ist eine 42%ige Lösung in DMF mit einer Viskosität von 12 000 mPa.s/25 °C. Die Lösung besteht aus 1000 g einer 40%igen PU-Lösung in DMF und 40 g eines Polyisocyanats aus Tripropylenglykol (1,0 Mol) und 4,4'-Diphenylmethandiisocyanat (5,0 Mol) mit einem NCO-Gehalt von ca. 20% und 10,0 g eines weiteren Polyisocyanats, erhalten durch Biuretisierung von 1,6-Hexandiisocyanat, mit einem NCO-Gehalt von ca. 20%.

Die 40%ige PU-Lösung selbst wird durch Polyaddition in Lösung hergestellt:

1000 g (0,50 Mol) Mischpolyester aus Hexandiol-1,6, Neopentylglykol (Mischverhältnis 65:35) und Adipinsäure, 54 g (0,60 Mol) Butandiol-1,3 und 191 g (1,10 Mol) Toluylen-diisocyanat-2,4/2,6 (Isomerengemisch 65/35) werden bei 70 bis 80 °C in DMF polyaddiert. Der Deckstrich B)5 zeichnet sich durch hervorragende Kaschierfestigkeit aus.

Beispiel 6

Die Deckstrichlösung B)6 ist eine 25%ige Lösung eines Polycarbonatpolyurethans in DMF, Viskosität 11 500 mPa.s/25 °C. Die PU-Lösung wird durch Polyaddition in DMF-Lösung hergestellt:

1000 g (0,50 Mol) eines Dihydroxy-polycarbonats (hergestellt aus Hexandiol-1,6 und Diphenylcarbonat) werden in der Schmelze bei 110 bis 120 °C mit 222 g (1,0 Mol) Isophorondiisocyanat umgesetzt. Dieses NCO-Prepolymer wird in 4086 g DMF gelöst. Nach Zusatz von 140 g (0,50 Mol) Terephthalsäure-bis-(γ-hydroxypropylamid) (Fp.: 202 °C) wird die Polyaddition bei 80 °C weitergeführt.

In analoger Weise kann das NCO-Prepolymer nach Lösen in 4086 g DMF mit 140 g (0,50 Mol) Terephthalsäure-bis-(β-hydroxyethyl-N-methylamid) (Fp.: 175 °C) bei 80 °C polyaddiert werden.

Die Haftstrichlösung A)6 ist eine 86%ige Zubereitung eines blockierten High-Solid-NCO-Prepolymeren in DMF, Viskosität 50 000 mPa.s bei 25 °C. 1000 g blockiertes NCO-Prepolymer, 50 g einer hochdispersen Kieselsäure und 65,0 g 3,3'-Dimethyl-4,4'-diaminodicyclohexylmethan werden vermischt.

Die Herstellung des blockierten NCO-Prepolymeren (85%ig in DMF) erfolgt durch Umsetzung von 1250 g (0,50 Mol) Diethylenglykoladipinsäurepolyester mit 174 g (1,0 Mol) Toluylendiisocyanat-2,4/2,6 (Isomerengemisch 80/20) in der Schmelze bei 100 °C. Nach Erreichen des gewünschten NCO-Gehalts wird mit 90,0 g Butanonoxim (1,04 Mol) bei 80 °C die Reaktion 30 Minuten fortgeführt und schliesslich 265 g DMF zugefügt. Das blockierte NCO-Prepolymer hat einen NCO-Gehalt von 2,35%.

Die Deckstriche aus Lösungen nach Beispiel 6 lassen sich problemlos, ohne Kaschierstörungen, mit dem Haftstrich B)6 verkleben.

Beispiel 7

Die Deckstrichlösung A)7 ist eine 30%ige Lösung eines Polyetherpolyurethans in DMF mit einer Viskosität von 20 000 mPa.s/25 °C. Die PU-Lösung wird durch Polyaddition in DMF hergestellt:

2000 g (1,0 Mol) Dihydroxypropylenpolyether werden in der Schmelze bei 110 bis 120 °C mit 262 g (1,0 Mol) 4,4'-Dicyclohexylmethandiisocyanat und 202 g (1,20 Mol) 1,6-Hexandiisocyanat zu einem NCO-Prepolymer umgesetzt. Dieses wird in 6500 g DMF gelöst. Nach Zusatz von 330 g (1,15 Mol) 1,4-Cyclohexan-bis-(δ-hydroxybuttersäureamid) (Fp.: 280 °C) wird die Polyaddition bis zum Erreichen der gewünschten Viskosität bei 80 °C fortgeführt.

Die Haftstrichlösung B)7 ist eine ca. 95%ige Zubereitung eines blockierten High-Solid-NCO-Prepolymeren in DMF mit einer Viskosität von 35 000 mPa.s/25 °C.

1000 g blockiertes NCO-Prepolymer, 20 g einer hochdispersen Kieselsäure und 58,0 g 4,4'-Diamino-dicyclohexylmethan werden zur gebrauchsfertigen Haftstrichpaste verrührt.

Die Herstellung des blockierten NCO-Prepolymeren, 95%ig in DMF, wird wie folgt durchgeführt:

2000 g (0,5 Mol) eines Polyhydroxy-oxypropylen-polyethers werden im Gemisch mit 125 g (0,22 Mol) eines Dihydroxyoxypropylen-polyethers (aus 4,4'-Dihydroxy-diphenyldimethylmethan und Propylenoxid) mit 187,5 g (0,75 Mol) 4,4'-Diphenylmethandiisocyanat und 130 g (0,75 Mol) Toluylendiisocyanat-2,4/2,6 (Isomerengemisch 80/20) in der Schmelze bei 100 °C zu einem NCO-Prepolymeren umgesetzt. Die verbleibenden NCO-Endgruppen werden mit 140 g (1,60 Mol) Butanonoxim bei 80 °C blockiert, die Schmelze wird in 136 g DMF gelöst. Der NCO-Gehalt des blockierten NCO-Prepolymeren beträgt ca. 2,3%.

Der Deckstrich aus dem aliphatischen Einkomponenten-PU gemäss A)7 kann mit der DMFhaltigen Haftstrichpaste A)7 problemlos ohne Angriff des Deckstrichs mit textilen Substraten kaschiert werden.

## Patentansprüche

1. Verfahren zur mehrstrichigen Umkehrbeschichtung von textilen, vorzugsweise bahnförmigen, Unterlagen zur Herstellung von Kunstleder aus zumindest einer Deckstrich- und mindestens einer Haftstrichlösung auf der Basis von Einkomponenten- oder Zweikomponentenpolyurethanen, wobei die Polyurethane auch Etherdiole, Esterdiole, Amiddiole oder Harnstoffdiole als Kettenverlängerungsmittel enthalten können, dadurch gekennzeichnet, dass man

A) als Deckstriche aromatische oder aliphatische Ein- oder Zweikomponenten-Polyurethane verwendet, welche unter Verwendung von Kettenverlängerungsmitteln auf der Basis von niedermolekularen Diolen mit Schmelzpunkten über 100 °C der Formeln (I) bis (VI)

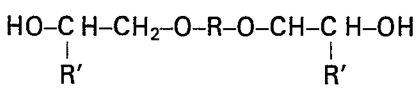
(I)

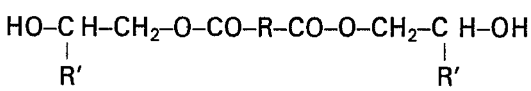
(II)

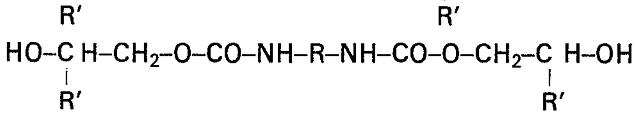
(III)

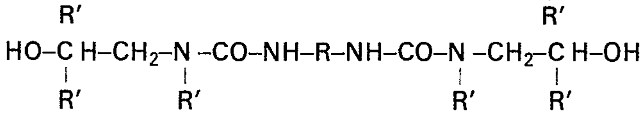
(IV)

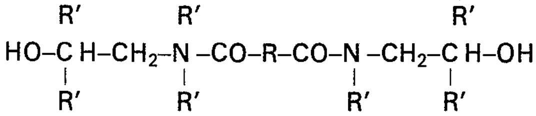
(V)

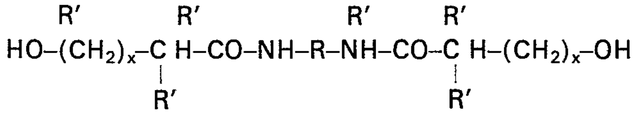
(VI)

wobei

R Alkylen-, Cycloalkylen- oder Arylenreste mit 2 bis 20, vorzugsweise 2 bis 15, C-Atomen,

R' H, $CH_3$ und

x ganze Zahlen von 0 bis 5 bedeuten, aufgebaut werden,

B) als Haftstriche von A) verschiedene aromatische oder aliphatische Ein- oder Zweikomponenten-Polyurethane (PU) und/oder High-Solid-PU-Reaktivmischungen verwendet, welche eine Feststoffkonzentration von mehr als 40 Gew.-% aufweisen und

C) als Lösungsmittel für A) und B) ein einziges polares Lösungsmittel aus der Reihe Dimethylformamid (DMF), Dimethylacetamid, Methylpyrrolidon oder Tetrahydrofuran ohne Wasserzusatz einsetzt.

2) Verfahren nach Anspruch 1, dadurch gekennzeichnet, dass die Deckstrich-Polyurethane A) pro Mol höhere Polyhydroxyverbindungen Kettenverlängererdiole der Formeln (I) bis (VI) mit Schmelzpunkten über 100 °C in Mengen von 0,5 bis 3,0 Mol enthalten und die auf diese Deckstriche gelegten Haftstriche B) in Form mindestens 40%iger, bevorzugt mindestens 50%iger, Lösungen in demjenigen polaren Lösungsmittel vorliegen, das auch zur Lösung der Deckstriche A) verwendet wird.

3. Verfahren nach Ansprüchen 1 und 2, dadurch gekennzeichnet, dass man für die Deckstrich-Polyurethane als Kettenverlängerungsdiole 1,4-Phenylen-bis-oxethylether, Terephthalsäure-bis-(β-hydroxyethylester) oder 4,4'-Diphenylmethan-bis-(β-hydroxyethylurethan) verwendet.

4. Verfahren nach Ansprüchen 1 bis 3, dadurch gekennzeichnet, dass man als polares Lösungsmittel für Deck- und Haftstriche Dimethylformamid verwendet.

5. Verfahren nach Ansprüchen 1 bis 4, dadurch gekennzeichnet, dass man als Haftstriche B) mindestens 40%ige Lösungen in Dimethylformamid verwendet.

6. Verfahren nach Ansprüchen 1 bis 5, dadurch gekennzeichnet, dass das Polyurethan B) der mindestens 40%igen DMF-Lösung neben höhermolekularen Polyhydroxylverbindungen 0 bis 3,0 Mol Alkylendiole und/oder -triole als Kettenverlängerer und etwa äquivalente Mengen an Diisocyanaten enthält.

7. Verfahren nach Ansprüchen 1 bis 6, dadurch gekennzeichnet, dass das Polyurethan B) der mindestens 40%igen DMF-Lösung mit blockierten oder nichtblockierten Polyisocyanaten vernetzt wird.

8. Verfahren nach Ansprüchen 1 bis 7, dadurch gekennzeichnet, dass das Polyurethan B) der mindestens 40%igen DMF-Lösung mit Formaldehyd-Harnstoff und/oder -melaminharzen vernetzt wird.

9. Verfahren nach Ansprüchen 1 bis 8, dadurch gekennzeichnet, dass das Polyurethan B) der mindestens 40%igen DMF-Lösung mit Gemischen aus blockierten Polyisocyanaten und Formaldehydharnstoff- und/oder -melaminharzen vernetzt wird.

10. Verfahren nach Ansprüchen 1 bis 9, dadurch gekennzeichnet, dass das Polyurethan B) der mindestens 40%igen DMF-Lösung aus 0,5 bis 3 Gew.-%, mit Butanonoxim blockierten NCO-Gruppen aufweisenden NCO-Prepolymeren und etwa äquivalenten Mengen an cycloaliphatischen Polyaminen hergestellt und mit Gemischen aus blockierten aromatischen Polyisocyanaten und Formaldehydmelaminharzen vernetzt wird.

## Revendications

1. Procédé pour l'enduction inverse en plusieurs passes de matières textiles, de préférence de supports en forme de bande pour la fabrication de similicuir à partir d'au moins une solution d'enduit de finition et d'au moins une solution d'enduit d'accrochage à base de polyuréthannes monocomposants ou bicomposants, les polyuréthannes pouvant également contenir des étherdiols, des ester-diols, des amide-diols ou des urée-diols comme agents d'allongement de chaîne, caractérisé en ce qu'on emploie

A) comme enduits de finition des polyuréthannes mono- ou bicomposants aromatiques ou aliphatiques qui sont préparés par emploi d'agents d'allongement de chaîne à base de diols de bas poids moléculaire avec des points de fusion supérieurs à 100 °C, de formules I) à VI)

$$HO-\underset{R'}{\underset{|}{C}}H-CH_2-O-R-O-CH-\underset{R'}{\underset{|}{C}}H-OH \qquad (I)$$

$$HO-\underset{R'}{\underset{|}{C}}H-CH_2-O-CO-R-CO-O-CH_2-\underset{R'}{\underset{|}{C}}H-OH \qquad (II)$$

$$HO-\underset{R'}{\underset{|}{C}}H-CH_2-O-CO-NH-R-NH-CO-O-CH_2-\underset{R'}{\underset{|}{C}}H-OH \qquad (III)$$

$$HO-\underset{R'}{\underset{|}{C}}H-CH_2-\underset{R'}{\underset{|}{N}}-CO-NH-R-NH-CO-\underset{R'}{\underset{|}{N}}-CH_2-\underset{R'}{\underset{|}{C}}H-OH \qquad (IV)$$

$$HO-\underset{R'}{\underset{|}{C}}H-CH_2-\underset{R'}{\underset{|}{N}}-CO-R-CO-\underset{R'}{\underset{|}{N}}-CH_2-\underset{R'}{\underset{|}{C}}H-OH \qquad (V)$$

$$HO-(CH_2)_x-\underset{R'}{\underset{|}{C}}H-CO-NH-R-NH-CO-\underset{R'}{\underset{|}{C}}H-(CH_2)_x-OH \qquad (VI)$$

dans lesquelles

R représente des restes alkylène, cycloalkylène ou arylène avec 2 à 20, de préférence 2 à 15 atomes de C,

R' est H, $CH_3$ et

x représente des nombres entiers de 0 à 5,

B) comme enduits d'accrochage pour A) différents polyuréthannes mono- ou bicomposants aromatiques ou aliphatiques (PU) et/ou des mélanges réactifs PU à extrait sec élevé possédant un taux de solides de plus de 40% en poids et

C) comme solvant pour A) et B) un solvant polaire unique de la série des diméthylformamide (DMF), diméthylacétamide, méthylpyrrolidone ou tétrahydrofuranne, sans addition d'eau.

2. Procédé selon la revendication 1, caractérisé en ce que les polyuréthannes de l'enduit de finition A) contiennent par mole de composés polyhydroxylés supérieurs, des diols allongeurs de chaîne de formules I) à VI) avec des points de fusion supérieurs à 100 °C en des quantités de 0,5 à 3,0 moles et que les enduits d'accrochage B) appliqués sur ces enduits de finition sont présents sous forme de solutions à au moins 40%, de préférence à au moins 50% dans un solvant polaire qui sert également à la mise en solution des enduits de finition A).

3. Procédé selon les revendications 1 et 2, caractérisé en ce qu'on utilise comme diols allongeurs de chaîne pour les polyuréthannes de la couche de finition le 1,4 phénylène-bis-oxyéthyl-éther, le téréphtalate de bis-(β-hydroxyéthyle) ou le 4,4'-diphénylméthane-bis-(β-hydroxyéthyl-uréthanne).

4. Procédé selon les revendications 1 à 3, caractérisé en ce qu'on emploie du diméthylformamide comme solvant polaire pour les enduits de finition et d'accrochage.

5. Procédé selon les revendications 1 à 4, caractérisé en ce qu'on emploie comme enduits d'accrochage B) des solutions à au moins 40% dans le diméthylformamide.

6. Procédé selon les revendications 1 à 5, caractérisé en ce que le polyuréthanne B) de la solution à au moins 40% dans le DMF contient, à côté de composés polyhydroxylés de poids moléculaire élevé, 0 à 3,0 moles d'alkylènediols et/ou d'alkylènetriols en tant qu'allongeurs de chaîne et des quantités sensiblement équivalentes de diisocyanates.

7. Procédé selon les revendications 1 à 6, caractérisé en ce que le polyuréthanne B) de la solution à au moins 40% dans le DMF est réticulé avec des polyisocyanates bloqués ou non bloqués.

8. Procédé selon les revendications 1 à 7, caractérisé en ce que le polyuréthanne B) de la solution à au moins 40% dans le DMF est réticulé avec des résines d'urée-formaldéhyde et/ou de mélamine-formaldéhyde.

9. Procédé selon les revendications 1 à 8, caractérisé en ce que le polyuréthanne B) de la solution à au moins 40% dans le DMF est réticulé avec des mélanges de polyisocyanates bloqués et des résines d'urée-formaldéhyde et/ou de mélamine-formaldéhyde.

10. Procédé selon les revendications 1 à 9, caractérisé en ce que le polyuréthanne B) de la solution à au moins 40% dans le DMF est obtenu à partir de 0,5 à 3% en poids de prépolymères NCO porteurs de groupes NCO bloqués par de la butanonoxime et de quantités sensiblement équivalentes de polyamines cycloaliphatiques et est réticulé avec des mélanges de polyisocyanates aromatiques bloqués et de résines de mélamine-formaldéhyde.

## Claims

1. Process for the multiple-coat reverse coating of textile, preferably web-form, substrates for producing artificial leather from at least one surface-coat solution and at least one adhesive-coat solution based on one-component or two-component polyurethanes, it being possible for the polyurethanes also to contain ether diols, ester diols, amide diols or urea diols as chain-extending agents, characterised in that

A) the surface coats used are aromatic or aliphatic one-component or two-component polyurethanes which have been synthesized using chain-extending agents based on low molecular weight diols with melting points above 100 °C of the formulae (I) to (VI)

$$HO-\underset{R'}{\underset{|}{C}}H-CH_2-O-R-O-\underset{R'}{\underset{|}{C}}H-OH \qquad (I)$$

$$HO-\underset{R'}{\underset{|}{C}}H-CH_2-O-CO-R-CO-O-CH_2-\underset{R'}{\underset{|}{C}}H-OH \qquad (II)$$

$$HO-\underset{R'}{\underset{|}{C}}H-CH_2-O-CO-NH-R-NH-CO-O-CH_2-\underset{R'}{\underset{|}{C}}H-OH \qquad (III)$$

$$HO-\underset{R'}{\underset{|}{C}}H-CH_2-\underset{R'}{\underset{|}{N}}-CO-NH-R-NH-CO-\underset{R'}{\underset{|}{N}}-CH_2-\underset{R'}{\underset{|}{C}}H-OH \qquad (IV)$$

$$HO-\underset{R'}{\underset{|}{C}}H-CH_2-\underset{R'}{\underset{|}{N}}-CO-R-CO-\underset{R'}{\underset{|}{N}}-CH_2-\underset{R'}{\underset{|}{C}}H-OH \qquad (V)$$

$$HO-(CH_2)_x-\underset{R'}{\underset{|}{C}}H-CO-NH-R-NH-CO-\underset{R'}{\underset{|}{C}}H-(CH_2)_x-OH \qquad (VI)$$

wherein

R denotes alkylene, cycloalkylene or arylene radicals with 2 to 20, preferably 2 to 15, C atoms,

R' denotes H or $CH_3$ and

x denotes integers from 0 to 5,

B) the adhesive coats used are aromatic or aliphatic one-component or two-component polyurethanes (PU) which are different from A) and/or high-solids PU-reactive mixtures which have a solids concentration of more than 40% by weight, and

C) one single polar solvent from the series comprising dimethyl formamide (DMF), dimethyl acetamide, methyl pyrrolidone and tetrahydrofuran is used, without the addition of water, as the solvent for A) and B).

2. Process according to Claim 1, characterized in that the surface-coat polyurethanes A) contain chain-extending diols of the formulae (I) to (VI) with melting points above 100 °C in quantities of 0,5 to 3,0 moles per mole of higher polyhydroxy compounds and the adhesive coats B) applied to these surface coats are in the form of at least 40% and preferably at least 50% solutions in the same polar solvent which is used for dissolving the surface coats A).

3. Process according to Claims 1 and 2, characterized in that 1,4-phenylene-bis-hydroxyethyl-ether, terephthalic acid-bis-(β-hydroxyethyl-ester) or 4,4-diphenylmethane-bis-(β-hydroxy ethylurethane) are used as the chain-extending diols for the surface-coat polyurethanes.

4. Process according to Claims 1 to 3, characterized in that dimethyl formamide is used as the polar solvent for the surface and adhesive coats.

5. Process according to Claims 1 to 4, characterized in that at least 40% solutions in dimethyl formamide are used as the adhesive coats B).

6. Process according to Claims 1 to 5, characterized in that the polyurethane B) of the at least 40% DMF solution contains, in addition to relatively high molecular weight polyhydroxyl compounds, 0 to 3,0 moles of alkylene diols and/or triols as chain extenders and approximately equivalent quantities of diisocyanates.

7. Process according to Claims 1 to 6, characterized in that the polyurethane B) of the at least 40% DMF-solution is crosslinked with blocked or unblocked polyisocyanates.

8. Process according to Claims 1 to 7, characterized in that the polyurethane B) of the at least 40% DMF-solution is crosslinked with formaldehyde-urea and/or formaldehyde-melamine resins.

9. Process according to Claims 1 to 8, characterized in that the polyurethane B) of the at least 40% DMF-solution is crosslinked with mixtures of blocked polyisocyanates and formaldehyde-urea and/or formaldehyde-melamine resins.

10. Process according to Claims 1 to 9, characterized in that the polyurethane B) of the at least 40% DMF-solution is produced from 0,5 to 3% by weight of NCO-prepolymers containing NCO-groups blocked with butanone oxime and approximately equivalent quantities of cycloaliphatic polyamines and is crosslinked with mixtures of blocked aromatic polyisocyanates and formaldehyde-melamine resins.